# EUROPEAN PATENT SPECIFICATION

(11) **EP 3 131 863 B1**
(45) Date of publication and mention of the grant of the patent: **19.06.2019**
(21) Application number: 15793730.1
(22) Date of filing: 30.10.2015
(51) Int. Cl.: C04B 35/52, C01B 32/05, C01B 32/182, C04B 35/528, C04B 38/00, H01G 11/24, H01G 11/26, H01G 11/32, H01G 11/48, H01M 4/04, H01M 4/583, H01M 4/66

(54) **HIERARCHICAL COMPOSITE STRUCTURES BASED ON GRAPHENE FOAM OR GRAPHENE-LIKE FOAM**
HIERARCHISCHE VERBUNDSTRUKTUREN AUF BASIS VON GRAPHENSCHAUM ODER GRAPHENÄHNLICHEM SCHAUM
STRUCTURES COMPOSITES HIÉRARCHIQUES À BASE DE GRAPHÈNE EN MOUSSE OU EN MOUSSE DE TYPE GRAPHÈNE

(30) Priority: 31.10.2014 EP 14382428
(43) Date of publication of application: 22.02.2017
(73) Proprietor: Repsol, S.A., 28045 Madrid (ES)
(72) Inventor: PEDRÓS, Jorge, 28040 Madrid (ES); BOSCÁ, Alberto, 28040 Madrid (ES); MARTÍNEZ, Javier, 28040 Madrid (ES); CALLE, Fernando, 28040 Madrid (ES); RUIZ-GÓMEZ, Sandra, 28040 Madrid (ES); PÉREZ, Lucas, 28040 Madrid (ES); BARRANCO, Violeta, 28049 Madrid (ES); PÁEZ DUEÑAS, Antonio, 28935 Móstoles (Madrid) (ES); GARCÍA SAN LUIS, Jesús, 28935 Móstoles (Madrid) (ES)
(74) Representative: ABG Intellectual Property, S.L.
(86) International application number: PCT/EP2015/075347
(87) International publication number: WO 2016/066843

(56) References cited:
- WO-A1-2007/137794
- WO-A1-2014/170912
- XIAOCHEN DONG ET AL: "Supercapacitor electrode based on three-dimensional graphenepolyaniline hybrid", MATERIALS CHEMISTRY AND PHYSICS, ELSEVIER SA, SWITZERLAND, TAIWAN, REPUBLIC OF CHINA, vol. 134, no. 2, 9 March 2012 (2012-03-09) , pages 576-580, XP028507326, ISSN: 0254-0584, DOI: 10.1016/J.MATCHEMPHYS.2012.03.066 [retrieved on 2012-03-30]
- SACHIN B. KULKARNI ET AL: "High-performance supercapacitor electrode based on a polyaniline nanofibers/3D graphene framework as an efficient charge transporter", JOURNAL OF MATERIALS CHEMISTRY A, vol. 2, no. 14, 1 January 2014 (2014-01-01), page 4989, XP055180627, ISSN: 2050-7488, DOI: 10.1039/c3ta14959e
- HUU T T ET AL: "Towards a more realistic modeling of solid foam: Use of the pentagonal dodecahedron geometry", CHEMICAL ENGINEERING SCIENCE, OXFORD, GB, vol. 64, no. 24, 16 December 2009 (2009-12-16), pages 5131-5142, XP026704417, ISSN: 0009-2509, DOI: 10.1016/J.CES.2009.08.028 [retrieved on 2009-09-01]
- JIANTONG LI ET AL: "Prevention of Graphene Restacking for Performance Boost of Supercapacitors-A Review", CRYSTALS, vol. 3, no. 1, 6 March 2013 (2013-03-06), pages 163-190, XP055239053, DOI: 10.3390/cryst3010163

## Description

### FIELD OF THE ART

The present invention relates to a hierarchical composite structure based on an open-cell graphene foam or graphene-like foam coated with a conductive nanoporous spongy structure, wherein the conductive nanoporous spongy structure is coating the open-cell graphene foam or graphene-like foam in a non-conformal way at least partially filling the hollow space of the pores of the graphene foam or of the graphene-like foam. The hierarchical composite structure of the present invention may be used as electrode and in electrochemical-energy-storage devices.

### STATE OF THE ART

Energy storage devices are increasingly present in a number of mass consumer goods such as hybrid and electric vehicles or portable electronics and are getting quickly into other fields such as energy harvesting and power grids. High capacity and fast charging speed are key aspects for all these applications. Moreover, the development of next-generation flexible electronics and wearable devices requires flexible power sources. However, the fabrication of such an energy storage device remains a great challenge owing to the lack of reliable materials that combine superior electron and ion conductivity, robust mechanical flexibility, and excellent cycling stability.

Electrochemical capacitors (ECs), also called supercapacitors, are charge-storage devices that possess high power density, exhibit excellent reversibility, and have very long cycle life. Based on the charge-storage mechanism, two major types of ECs can be categorized: (i) electrical double-layer capacitors (EDLCs), which store energy by utilizing the double-layer capacitance arising from the charge separation at the electrode-electrolyte interface, mainly focused on carbon materials, (ii) pseudocapacitors, which store energy by utilizing the pseudocapacitance arising from fast and reversible faradaic reactions in the electrode surface formed with electrochemically-active materials. Compared with EDLCs, pseudocapacitors based on transition metal oxides or conductive polymers may provide much higher specific capacitances. However, their actual applications are still limited by high cost, low operation voltage, or poor rate capability, mostly because of inefficient mass transport or of slow faradic redox kinetics. In the case of the oxides, the high electrical resistance increasing with the thickness can limit the practical thickness of the electrodes reducing the charge transport. This limitation does not apply to conductive polymers that exhibit small internal resistance, though they can present lower cycling stability.

The required characteristics for a material to be used as supercapacitor electrode are strong capacitive behavior, large specific surface area, lightness, high conductivity, and electrochemical stability. Activated carbons, with surface areas from 1000 m²/g to 2500 m²/g, are the most commonly used materials. However, the capacitance may drop dramatically at high scanning rates because of their tortuous pore structure.

In the search of electrode materials for supercapacitors, particular relevance is given to graphene because of its high electrical conductivity, large surface area and profuse interlayer structure, theoretically meeting the requirements of high performance supercapacitors. Various graphene-based materials, including chemical vapor deposition (CVD) graphene and chemically or thermally reduced graphene oxide (rGO), have been extensively studied as electrodes for supercapacitors. Several authors (Wu et al., ACS Nano 4(2010) 1963; Zhang et al., Chemistry of Materials 22 (2010)1392; and Liu et al, CN102532891 A) disclose supercapacitor electrode materials based on the mixture of graphene powder and a conductive polymer wherein both materials have been processed separately and mixed together to form a porous layer structure.

Graphene's extraordinary properties have recently been taken to the third dimension. The large specific surface area and the conductive robust structure of three-dimensional (3D) graphene structures may assist in charge transfer allowing a facile flow of electronic charges as well as improving the interfacial properties between electrode and electrolyte. Among the 3D graphene structures, graphene foam is a very promising structure for providing better electrode materials for energy storage devices. Several authors have reported graphene foam conformally coated with thin layers of pseudocapacitive materials wherein the specific surface area does not change, or barely increases if the thin layer deposited has certain porosity. For example, Yager (US 2013/0021718A1) reports a porous graphene electrode material wherein pseudocapacitive materials, such as RuO₂, Fe₃O₄, or MnO₂, coat a 3D open-cell graphene structure.

Particularly, WO 2007/137794 A1 discloses a supercarpacitor electrode comprising a porous carbon monolith coated with a layer of an electrically conductive polymer having low conductivities such as 0.02 S/cm and 0.1 S/cm. Dong et al. (Mat. Chem. and Phys. 134(2012) 576) report a supercapacitor electrode based on a grahene foam with a conformal film of polyaniline (PANI) reaching a specific capacitance of 346 F/g at a current density of 4 A/g. Kulkarni et al. (J. Mat. Chem. A 2(2014) 4989) report a supercapacitor electrode based on a PANI nanofibers adsorbed on a 3D graphene surface by electrostatic and Π-Π stacking interactions. The PANI nanofibers constitute a quasi-conformal coating on the graphene foam. Kulkarni et al. report maximum specific capacitance values for the PANI nanofibers of 1002 F/g and 435 F/g for PANI/3D graphene foam and PANI/stainless steel electrodes at a current density of 1 mA/cm². Particularly, Kulkarni et al. mention that the overgrowth of the nanostructures leads to the agglomeration of nanofibers which dramatically decreases the specific surface area of the graphene-based electrode and reduces, as a result, the effective capacitance. In particular, the limited amount of PANI nanofibers that Kulkarni et al. are able to deposit on the graphene foam reflects in a small areal capacitance with a maximum value of only 0.31 F/cm² at a current density of 1 mA/cm². Therefore, despite their extraordinary advantages, graphene-based electrodes face one important technical limitation: to achieve a highly compact assembly but retain a high porosity in order to provide a large volumetric capacitance. In this sense, on the one hand, self-aggregation of graphene sheets can dramatically decrease the specific surface area of graphene-based electrodes hindering the ion diffusion from the electrolyte to the electrodes and thereby reducing the effective capacitance. However, on the other hand, a low packing density leads to large empty spaces in the electrode that are not effective for storing ions but are flooded by the electrolyte, thereby increasing the final device weight without adding capacitance. The latter limits the energy density of the electrode, making hard to scale it up in real applications, such as the power supply of an electric vehicle. Likewise, the increasing compactness of portable electronics also demands more efficient electrodes for a better utilization of the limited space. Therefore, a need remains for electrode materials with not only larger specific surface area, higher specific capacitance, and enhanced conductivity but also larger volumetric capacitance, as well as improved methods for their synthesis. Consequently, in spite of extensive research and effort, making supercapacitors with high energy and power density still remains challenging.

### BRIEF DESCRIPTION OF THE INVENTION

The object of the present invention is to provide a hierarchical composite structure comprising an open-cell graphene foam or graphene-like foam, wherein the graphene-like material in the graphene-like foam is ultra-thin graphite or reduced graphene oxide, wherein the graphene foam or graphene-like foam has pores of a mean diameter ranging from 5 to 300 µm and is coated with a conductive nanoporous spongy structure comprising a framework of entangled nanofibers of a conductive polymer, and wherein at least 10% v/v of the hollow of the pores of the graphene foam or graphene-like foam is filled with the framework of entangled nanofibers of a conductive polymer.

The large specific surface area of the hierarchical composite structure of the invention, combined with the conductivity of the nanoporous spongy structure that coats the open-cell graphene foam or graphene-like foam and partially fills the hollow of the pores of the structure (non-conformal coating), allows a high ion diffusion and charge transference when used as an electrode.

Further, the hierarchical composite structure of the invention providing a large specific surface area and a large packing density for the active material, reduces the needed volume for the collector and the electrolyte without changing the ions flow rate and the charge extraction.

Moreover, the intimate contact between the open-cell graphene foam or graphene-like foam and the conductive nanoporous spongy structure offers a low internal resistance enabling a rapid charge transport to the collector through the nanopores of the conductive spongy structure.

Hence, the hierarchical composite structure of the present invention combines the high conductivity, porosity, lightness and the large specific surface area of the graphene foam or graphene-like foam as extended collector with the high pseudocapacitance and large packing density of the conductive nanoporous spongy structure, providing an electrode with a high specific and volumetric capacitance.

Therefore, in a first aspect the invention is directed to a hierarchical composite structure comprising an open-cell graphene foam or graphene-like foam, wherein the graphene-like material in the graphene-like foam is ultra-thin graphite or reduced graphene oxide, wherein the graphene foam or graphene-like foam has pores of a mean diameter ranging from 5 to 300 µm and is coated with a conductive nanoporous spongy structure comprising a framework of entangled nanofibers of a conductive polymer, and wherein at least 10 % v/v of the hollow of the pores of the graphene foam or graphene-like foam is filled with the framework of entangled nanofibers of a conductive polymer.

In a second aspect, the invention is directed to a process for preparing a hierarchical composite structure comprising the following steps:
a) providing a graphene foam or graphene-like foam having an open-cell structure;
b) immersing the graphene foam or graphene-like foam in an electrolyte solution, wherein the electrolyte solution comprises a conductive material or a precursor thereof;
c) removing the air trapped in the graphene foam or graphene-like foam immersed in the electrolyte solution;
d) electrodepositing the conductive material, or the conductive material formed from the precursor thereof, on the graphene foam or graphene-like foam in the electrolyte solution, so as a conductive nanoporous spongy structure is formed coating the graphene foam or graphene-like foam and partially filling the hollow of the pores of the graphene foam or graphene-like foam.

Additionally, the invention also refers to a hierarchical composite structure obtainable by the process as defined above.

In a further aspect the invention is directed to an electrode comprising the hierarchical composite structure and to an electrochemical-energy-storage device comprising the electrode, in particular, to a supercapacitor comprising the electrode.

### BRIEF DESCRIPTION OF THE FIGURES

The accompanying drawings, which are incorporated in and constitute a part of this specification, illustrate exemplary embodiments of the invention and, together with the written description, serve to explain the principles of the invention. In the drawings:

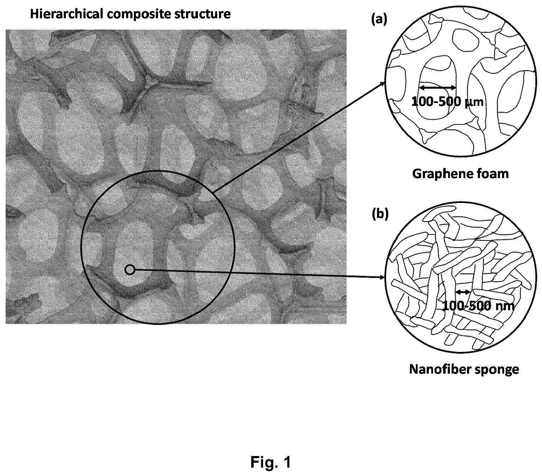

Figure 1 is a schematic representation of an exemplary hierarchical composite structure of the invention wherein an open-cell graphene foam is coated with a conductive nanofiber framework and wherein the hollow of the pores of the open-cell graphene foam is filled with the conductive nanofiber framework. In circle (a), the structure of the open-cell graphene foam is detailed and its pore size is indicated. In circle (b), a detail of the structure of the conductive nanofiber framework that coats the open-cell graphene foam and fills the hollow of the pores of the open-cell graphene foam is shown. The pore size of the nanofiber sponge is also indicated.
Figures 2a-d are SEM images of: a) an open-cell graphene foam wherein the graphene foam is coated and the hollow of the pores is filled with a framework of PANI nanofibers; b) a detail of the graphene foam wherein the PANI nanofibers have been partially removed from the surface of the graphene foam; c) PANI nanofibers framework wherein the PANI nanofibers having a mean diameter of 200 nm and several microns in length are entangled according to a particular embodiment of the invention; d) a detail of the PANI nanofibers.
Figures 3a-b are SEM images of: a) an open-cell nickel foam wherein graphene has been deposited by CVD; b) free-standing open-cell graphene foam obtained after the removal of the underlying nickel foam.
Figure 4a-f are SEM images of conductive nanoporous spongy structures comprising a framework of PANI nanofibers that have been electrodeposited at 0.8 V, in the following conditions: a-b) continuous potential (DC) along with stirring; c-d) continuous potential (DC); and e-f) pulsed potential along with stirring. The right-column images are magnified views of the framed regions in the left-column images. The diameter of the nanofibers and the number of nanofibers per unit area (or planar density) are indicated.
Figure 5 is a cyclic voltammogram (CV) of an exemplary electrode of the invention comprising a hierarchical composite structure of PANI nanofibers/graphene foam at scanning rates of 5 mV/s, 10 mV/s and 20 mV/s.
Figure 6a-b shows galvanostatic charge-discharge curves of an exemplary electrode of the invention comprising a hierarchical composite structure of PANI nanofibers/graphene foam measured at different currents in a voltage range of a) -0.2 to 0.5 V at 0.5 mA, 1 mA, 2 mA, 5 mA, 10 mA and 20 mA; and b) -0.2 to 0.8 V at 2 mA, 9 mA, 13.5 mA, 18 mA, 22.5 mA and 27 mA. The insets in a) and b) show the details of the curves at short times.
Figure 7a-b are graphs showing a) the specific capacitance per gram of PANI, and b) the equivalent series resistance (ESR) at different current densities of an exemplary electrode of the invention comprising a hierarchical composite structure of PANI nanofibers/graphene foam.
Figure 8 is a graph showing the areal and volumetric capacitance of an electrode comprising a hierarchical composite structure of PANI nanofibers/graphene foam at different current densities according to a particular embodiment of the invention.
Figure 9 is a Ragone plot of an electrode according to certain embodiments of the invention comprising a hierarchical composite structure of PANI nanofibers/graphene foam measured in two voltage ranges, -0.2 to 0.5 V (ΔV=0.7 V) and -0.2 to 0.8 V (ΔV=1 V).
Figure 10 is a cycle stability graph of an electrode of the invention comprising a hierarchical composite structure of PANI nanofibers/graphene.

### DETAILED DESCRIPTION OF THE INVENTION

The present invention relates to a hierarchical composite structure comprising an open-cell graphene foam or graphene-like foam, wherein the graphene foam or graphene-like foam has pores of a mean diameter ranging from 5 to 300 µm and is coated with a conductive nanoporous spongy structure comprising a framework of entangled nanofibers of a conductive polymer, and wherein at least 10% v/v of the hollow of the pores of the graphene foam or graphene-like foam is filled with the framework of entangled nanofibers of a conductive polymer. A representative scheme of the hierarchical composite of the present invention is shown in Figure 1.

By the term "hierarchical" it is understood a porous structure consisting of interconnected pores on different length scales. In the context of the present invention, the term "hierarchical composite structure" refers to a porous composite structure consisting of interconnected pores of different length scales and comprising at least two different materials, one being an open-cell graphene foam or graphene-like foam having macroscopic pores and the other a conductive material in the form of a spongy structure having nanopores.

In the context of the present invention the term "open-cell graphene foam or graphene-like foam" refers to a graphene foam or graphene-like foam structure having a plurality of pores where inner surfaces of individual pores are accessible from neighboring pores in contrast to a closed-cell structure where individual pores may be self-contained.

The open-cell graphene foam or graphene-like foam in the present invention provides a macrostructure template or scaffold with a 3D interconnecting macroporous architecture having large voids and interfaces. The pores of the graphene foam or graphene-like foam have a mean diameter ranging from 5 to 300 µm, preferably the mean diameter of the pores is at least 50 µm.

By the term "graphene" it is understood a single layer or a few layers of graphene. The term "multi-layer graphene" refers to multiple layers of single atomic graphene. The graphene in the open-cell graphene foam or graphene-like foam may have between 1 and 20 layers of single atomic graphene. Preferably, the open-cell graphene foam or graphene-like foam has between 1 and 15 layers, more preferably between 1 and 10 layers, even more preferably between 1 and 5 layers of single atomic graphene. Even more preferably, the graphene in the open-cell graphene foam used in the invention is single-layer, bilayer or multilayer graphene having form 3 to 20 layers, more preferably from 3 to 5 layers of single atomic graphene.

The graphene-like material in the graphene-like foam is ultra-thin graphite or reduced graphene oxide. In the context of the present invention by the term "ultra-thin graphite", it is understood a structure with a stack of not more than 300 layers of single atomic graphene. The ultra-thin graphite in the open-cell graphene-like foam may have between 21 and 300 layers of single atomic graphene. Preferably, the ultra-thin graphite in the open-cell graphene-like foam has between 21 and 200 layers, more preferably between 21 and 100 layers, even more preferably between 21 and 50 layers of single atomic graphene. In one embodiment, the ultra-thin graphite has 25 layers of single atomic graphene.

By the term "conductive nanoporous spongy structure" it is understood a structure having a nanoporous framework and comprising a conductive material. In the context of the present invention the term "spongy" refers to the lightness, elasticity, and open cell geometry of the nanoporous structure.

In the context of the present invention, the conductive nanoporous spongy structure coats the open-cell graphene foam or graphene-like foam of the hierarchical composite structure of the invention and fills at least 10% v/v of the hollow of the pores of the graphene foam or graphene-like foam increasing the specific surface area, as well as the packing density of the nanoporous spongy structure, and thereby contributing to improve the specific and volumetric capacitance of the graphene foam or graphene-like foam, thus improving the electrochemical properties thereof.

In a particular embodiment, the conductive nanoporous spongy structure comprises a conductive polymer. Preferably, the conductive polymer is selected from polyaniline (PANI), polypyrrol, polycarbazol, polyindol, polyazepine, polythiophene, poly(3,4-ethylenedioxythiophen), polyphenylene sulfide, polyfluorene, polyphenylene, polypyrene, polyazulene, polynaphtalene, polyacetylene, polyphenylene vinylene and derivatives thereof. In a more preferred embodiment the conductive polymer is polyaniline (PANI).

In the context of the present invention, the nanopores of the conductive nanoporous spongy structure have a mean diameter comprised between 5 and 500 nm, preferably of at least 50 nm, more preferably a diameter between 50 and 500 nm, more preferably between 100 and 500 nm, even more preferably between 200 and 500 nm, and even more preferably between 300 and 500 nm.

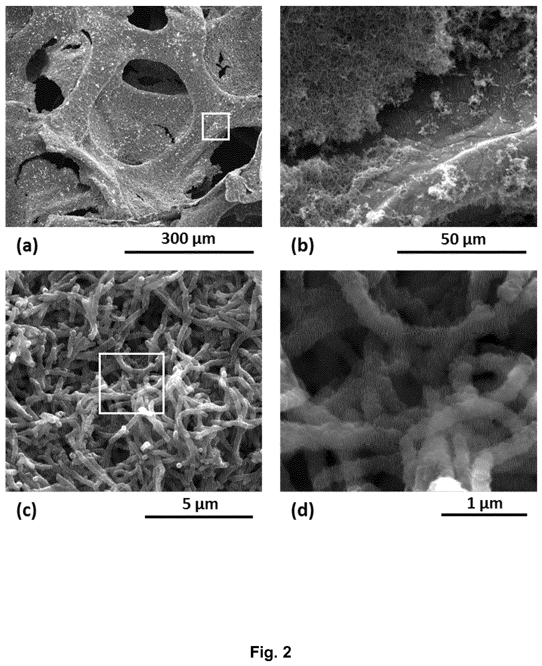

As shown in fig. 2, according to one embodiment of the invention, the conductive nanoporous spongy structure comprises a framework of nanofibers of a conductive polymer that provides a nanoporous structure, wherein the nanopores result from the empty space left between the nanofibers. In a particular embodiment, the nanofibers of the conductive nanoporous spongy are separated leaving nanopores in the nanofibers framework with a mean diameter comprised between 5 and 500 nm. Preferably, the nanopores of the framework of nanofibers have a diameter of at least 50 nm, more preferably between 50 and 500 nm, even more preferably the nanopores have a diameter comprised between 100 and 500 nm, even more preferably between 200 and 500 nm, even more preferably between 300 and 500 nm.

The nanofibers of the conductive nanoporous spongy are entangled.

The nanofiber morphology leads to a high specific capacitance and reduces the diffusion resistance of the electrolyte into the electrode matrix. In a particular embodiment, the nanofibers have a diameter between 1 and 250 nm, preferably a diameter of at least 5 nm, more preferably a diameter comprised between 50 and 210 nm, even more preferably a diameter comprised between 100 and 200 nm, even more preferably between 100 and 150 nm. In a more preferred embodiment, the nanofibers have a diameter of about 100 nm.

In the context of the present invention, the nanofibers have a length comprised between 1 to 100 µm. Preferably, the length of the nanofibers is comprised between 1 and 75 µm, more preferably between 1 and 50 µm, even more preferably between 1 and 25 µm. In a more preferred embodiment the nanofibers have a length comprised between 1 and 10 µm.

According to the present invention, the nanofibers have a diameter comprised between 1 and 250 nm and a length comprised between 1 to 100 µm. In a particular embodiment, the nanofibers have a diameter comprised between 1 and 150 nm and a length comprised between 1 and 75 µm. In a more particular embodiment, the nanofibers have a diameter comprised between 1 and 100 nm and a length comprised between 1 and 75 µm. In a preferred embodiment, the nanofibers have a diameter comprised between 1 and 100 nm and a length comprised between 1 and 50 µm. In a more preferred embodiment, the nanofibers have a diameter comprised between 1 and 100 nm and a length comprised between 1 and 10 µm.

In a particular embodiment, the graphene foam or graphene-like foam is coated with a conductive nanoporous spongy structure comprising a framework of nanofibers of a conductive polymer having a planar density comprised between 20 nanofibers and 150 nanofibers per 3 µm². Preferably, a planar density comprised between 40 and 100 nanofibers per 3 µm², more preferably comprised between 60 and 100 nanofibers per 3 µm².

In the context of the invention, the term "planar density" is understood the number of fibers per unit area.

The nanofibers of the framework forming the conductive nanoporous spongy structure comprise a conductive polymer. In a particular embodiment the conductive polymer in the nanofibers is selected from polyaniline (PANI), polypyrrole, polycarbazole, polyindole, polyazepine, polythiophene, poly(3,4-ethylenedioxythiophene), polyphenylene sulfide, polyfluorene, polyphenylene, polypyrene, polyazulene, polynaphtalene, polyacetylene, polyphenylene vinylene and derivatives thereof. Preferably the conductive polymer is polyaniline (PANI).

Figure 2 shows an example of open-cell graphene foam of the invention coated by a conductive nanoporous spongy structure wherein the hollow of the pores is partially filled with a conductive nanoporous spongy structure comprising a framework of nanofibers of a conductive polymer.

At least 10% v/v of the hollow of the pores is filled, preferably between 10 and 50% v/v, more preferably between 10 and 40% v/v, even more preferably between 10 and 20% v/v, even more preferably from 10% to 15% v/v. In a more preferred embodiment 11% v/v of the hollow of the pores is filled.

In a particular embodiment, the hollow of the pores of the open-cell graphene foam or graphene-like foam is filled from 10 to 90% v/v with the nanoporous spongy structure, preferably the hollow of the pores is filled from 15 to 90% v/v, more preferably from 40 to 90% v/v, even more preferably from 45 to 90% v/v. In a preferred embodiment the hollow of the pores is filled from 50 to 85% v/v, more preferably from 60 to 80% v/v. The intimate contact between the open-cell graphene foam or graphene-like foam and the conductive nanoporous spongy structure allows the flow of electronic charges improving the interfacial properties of the hierarchical composite structure.

Another aspect of the present invention relates to a process for preparing the hierarchical composite structure comprising the following steps:
a) providing an open-cell graphene foam or graphene-like foam having an open-cell structure;
b) immersing the open-cell graphene foam or graphene-like foam in an electrolyte solution, wherein the electrolyte solution comprises a conductive material or a precursor thereof;
c) removing the air trapped in the open-cell graphene foam or graphene-like foam immersed in the electrolyte solution;
d) electrodepositing the conductive material, or the conductive material formed from the precursor thereof, on the graphene foam or graphene-like foam in the electrolyte solution, so as a conductive nanoporous spongy structure is formed coating the graphene foam or graphene-like foam and at least partially filling the hollow of the pores of the graphene foam or graphene-like foam.

In a particular embodiment, the open-cell graphene foam or graphene-like foam is formed by chemical vapor deposition (CVD), plasma-assisted chemical vapor deposition or gelation. Preferably, graphene is directly deposited by CVD onto a metal foam-like template suitable for producing graphene. Chen and coworkers (Nature Materials, 10 (2011) 424) first developed a general strategy for the synthesis of 3D graphene foams using template-directed CVD. The procedure consisted of the decomposition of CH₄ at 1000°C under ambient pressure in the presence of a highly interconnected 3D scaffold of nickel. Graphene films were then precipitated on the surface of the nickel foam. The obtained graphene-foam exhibited a continuous and interconnected graphene 3D network in which all the graphene sheets were in direct contact with each other without breaks, copying and inheriting the interconnected 3D scaffold structure of the nickel-foam template.

The CVD process may use any suitable materials and conditions for forming graphene. Exemplary metals which may be suitable as metal foam-like template for producing graphene include scandium, titanium, vanadium, chromium, manganese, iron, cobalt, nickel, ruthenium, platinum, palladium, iridium, rhenium or copper. In some examples, suitable metals for preparation of graphene include nickel, copper, ruthenium, iron, cobalt, or platinum. Preferably the metal foam includes nickel.

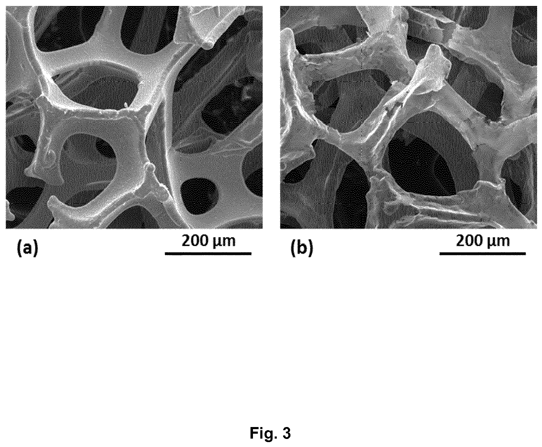

According to the present invention, graphene may be deposited on the surfaces of the metal foam. Figure 3a shows a SEM image of exemplary nickel foam wherein graphene has been deposited by CVD. Once the graphene is deposited, the metal template is subsequently removed to obtain the graphene foam or graphene-like foam. The template may be removed by chemical wet etching or dissolved to leave the free-standing open-cell graphene foam. In the context of the present invention, by free-standing open-cell graphene foam it is understood the open-cell graphene foam resulting from the metal template removal. Figure 3b shows a SEM image of a free-standing open-cell graphene foam of the invention wherein the underlying metal foam has been removed by means of a HCl:H₂O (1:3 in volume) solution. Other alternative etchants include FeCl₃, diluted H₂SO₄, diluted aqua regia (mixture of HCl and HNO₃), and Marble's reagent.

Alternatively, before the removal of the metal foam, a polymer may be deposited on the open-cell graphene foam or graphene-like foam to prevent any damage in the open-cell graphene-like foam or graphene foam. In a particular embodiment the polymer is a layer of PMMA:chlorobenzene. Once the metal foam is removed by chemical wet etching or dissolved, the polymer deposited on the graphene foam or graphene-like foam is dissolved with a solvent. In a particular embodiment the polymer is dissolved in hot acetone. In a particular embodiment the acetone temperature is about 55°C.

The graphene in the open-cell graphene foam or graphene-like foam may have between 1 and 20 layers. Preferably, the graphene has between 1 and 15 layers, more preferably between 1 and 10 layers, even more preferably between 1 and 5 layers. In one embodiment, graphene is single layer graphene, bilayer graphene or multi-layer graphene having from 3 to 5 layers of single atomic graphene.

The graphene-like material in the open-cell graphene-like foam is ultra-thin graphite or reduced graphene oxide.

The pores of the open-cell graphene foam or graphene-like foam have a mean diameter ranging from 5 to 300 µm, preferably the mean diameter of the pores is at least 50 µm.

According to the step b) of the process of the invention, the graphene foam or graphene-like foam is immersed in an electrolyte solution comprising a conductive material or a precursor thereof. Preferably, the electrolyte solution is an electrolyte aqueous solution.

In a particular embodiment, the precursor of the conductive material is a monomer that can provide a conductive polymer, i.e., a precursor monomer of a conductive polymer. In a preferred embodiment, the monomer in the electrolyte solution is aniline.

In another particular embodiment, when the conductive material is electrodeposited on the graphene foam or graphene-like foam in the form of fibers in the subsequent step d) of the process of the invention, the electrolyte solution may include an anti-agglomerating agent. Said anti-agglomerating agent avoids the agglomeration of the fibers during the formation of the conductive nanoporous spongy structure.

In a particular embodiment, said anti-agglomerating agent is an alcohol, more preferably a linear or branched C₁-C₄ alcohol, even more preferably is ethanol or methanol.

In another particular embodiment, the electrolyte solution includes an acid, preferably hydrochloric acid.

In a particular embodiment, the electrolyte solution comprises a precursor monomer of a conductive polymer, an anti-agglomerating agent, such as a linear or branched C₁-C₄ alcohol, and an acid. Preferably, the electrolyte solution is an electrolyte aqueous solution comprising aniline, methanol and hydrochloric acid.

According to the step c) of the process of the invention, the air trapped in the graphene foam or graphene-like foam immersed in the electrolyte solution is removed. In a particular embodiment, the air trapped is removed by vacuum. In a particular embodiment, the air trapped is removed using a membrane pump, for example at a pressure of 8 mbar.

In a particular embodiment, if no anti-agglomerating agent has been added previously to the electrolyte solution, said anti-agglomerating agent can be added after removal of the air trapped in the graphene foam or graphene-like foam. In a particular embodiment, said anti-agglomerating agent is an alcohol, more preferably a linear or branched C₁-C₄ alcohol, even more preferably is ethanol or methanol.

According to step d) of the process of the invention, a conductive nanoporous spongy structure is formed to coat the open-cell graphene foam or graphene-like foam and to partially fill the hollow of the pores of the graphene foam or graphene-like foam, increasing the specific surface area of the structure, as well as the packing density of the structure, and thereby contributing to improve the specific and volumetric capacitance of the graphene foam or graphene-like foam, thus improving the electrochemical properties thereof.

This step is carried out by electrodepositing the conductive material, or the conductive material obtained from the precursor thereof, on the graphene foam or graphene-like foam in the electrolyte solution, so as a conductive nanoporous spongy structure is formed coating the graphene foam or graphene-like foam and partially filling the hollow of the pores of the graphene foam or graphene-like foam.

When the electrolyte solution comprises a precursor of the conductive material, said precursor is transformed into the conductive material during the electrodeposition, thus forming the conductive nanoporous spongy structure that coats the graphene foam or graphene-like foam and partially fills the hollow of the pores of the graphene foam or graphene-like foam.

When the conductive material is obtained from a precursor monomer of a conductive polymer, such as aniline, said monomer polymerizes during the electrodeposition forming a framework of nanofibers of conductive polymer that provides the conductive nanoporous spongy structure.

In a particular embodiment, the electrolyte solution where the electrodeposition is carried out comprises a precursor monomer of a conductive polymer and an anti-agglomerating agent. The preferential hydrogen bonding between molecules of the polymer that are formed and the anti-agglomerating agent pushes the polymer chains apart promoting the growth of nanofibers and preventing their agglomeration thus leading to extensive conductive 3D-interconnected polymer networks or nanoporous spongy structures.

In a particular embodiment, step d) is carried out by electrodepositing in an electrolyte solution containing a mixture of a precursor monomer of a conductive polymer, an alcohol, and an acid.

As used herein "electrodeposition" is the deposition of the conductive material on the graphene foam or graphene-like foam that occurs upon the application of an electrical potential, by which a conductive nanoporous spongy structure is formed.

Electrodeposition can be carried out under a variety of electrochemical conditions including the following, among others: (a) constant current, (b) constant voltage, (c) current scan/sweep, e.g., via a single or multiple scans/sweeps, (d) voltage scan/sweep, e.g., via a single or multiple scans/sweeps, (e) current square waves or other current pulse wave forms, (f) voltage square waves or other voltage pulse wave forms, and (g) a combination of different current and voltage parameters.

In the context of the present invention, electrodeposition can be performed in a vessel containing an electrolyte solution and three electrodes (working, reference, and counter electrodes). Current is passed between the working and the counter electrodes, while the potential is measured against the reference electrode. The graphene foam or graphene-like foam acts as the working electrode. In a particular embodiment a platinum mesh is used as counter electrode together with an Ag/AgCI reference electrode.

The potential applied during the electrodeposition process determines the homogeneity of the solution inside the foam, and thereby, the density of the conductive nanoporous spongy structure obtained.

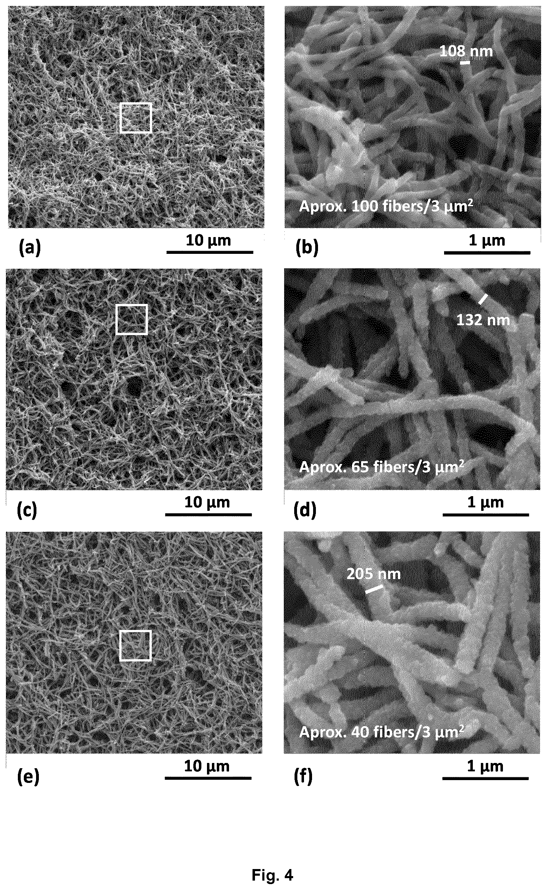

In a particular embodiment, the potential applied during the electrodeposition process is pulsed. Preferably, a pulsed potential along with a stirrer is applied during the electrodeposition. In another particular embodiment, the potential applied during the electrodeposition process is continuous (DC). More preferably, a continuous potential along with a stirrer is used during the electrodeposition process. In this regard, figures 4a-f show the SEM images of a conductive nanoporous spongy structure comprising a framework of polyaniline (PANI) nanofibers electrodeposited on a graphene foam under continuous potential along with stirring (figures 4a-b), continuous potential (figures 4c-d) and pulsed potential along with stirring (figures 4e-f). The diameter, density and roughness of the walls of the electrodeposited PANI nanofibers depend on how the potential is applied. Thus, when a continuous potential along with stirring is applied (figures 4a-b), a higher density of PANI nanofibers with smoother walls and lower diameter is electrodeposited on a graphene foam, as shown in figures 4a-f. In a preferred embodiment, a continuous potential between 0.65 and 0.85 V is used during the electrodeposition process. In a preferred embodiment the potential applied during the electrodeposition process is 0.8 V.

In a particular embodiment, the electrodeposition is carried out at room temperature, i.e. 20°C. Preferably, the electrodeposition process is carried out between -5 and 30°C. Even more preferably, the electrodeposition process is carried out between 15 and 30°C. More preferably the temperature during the electrodeposition process is comprised between 15 and 25°C.

In a particular embodiment, the electrodeposition is performed in an electrolyte aqueous solution comprising hydrochloric acid (HCl), methanol (CH₃OH) and aniline. Preferably, the electrodeposition process is performed in an electrolyte aqueous solution of HCl:CH₃OH:aniline (x:y:0.2 M; wherein "x" is the molarity of HCI and "y" is the molarity of CH₃OH) with "x" between 0.8 and 1.2 and with "y" between 0.4 and 0.6). More preferably, the electrodeposition process is performed in an electrolyte aqueous solution of HCl:CH₃OH:aniline (1:0.5:0.2 M).

During the electrodeposition process, the time of application of the electrical potential determines the percentage of filling of the hollow of the pores of the graphene foam or graphene-like foam. In a particular embodiment, the electrodeposition time is at least 7 min, preferably the electrodeposition time is comprised between 9 min and 100 min, more preferably, the electrodeposition time is comprised between 10 and 60 min. Even more preferably, the electrodeposition time is comprised between 15 and 30 min. In a preferred embodiment the electrodeposition time is 18 min. More preferably, the electrodeposition time is 20 min.

At least 10% v/v of the hollow of the pores of the graphene foam or graphene-like foam is filled, preferably between 10 and 50% v/v, more preferably between 10 and 40% v/v, even more preferably between 10 and 20% v/v, even more preferably from 10% to 15% v/v, even more preferably 11% v/v of the hollow of the pores of the graphene foam or graphene-like foam is filled.

In a particular embodiment, the hollow of the pores of the graphene foam or graphene-like foam is filled from 10 to 90% v/v with the nanoporous spongy structure, preferably the hollow of the pores is filled from 15 to 90% v/v, more preferably from 40 to 90% v/v, even more preferably from 45 to 90% v/v. In a preferred embodiment, the hollow of the pores is preferably filled from 50 to 85% v/v, even more preferably from 60 to 80% v/v.

The process of filling the pores is governed by the electrodeposition conditions, the conductive material and time described above. In a preferred embodiment, for example 11% of the hollow of the pores of the graphene foam or graphene-like foam is filled with PANI nanofibers in 9 min of electrodeposition process as described above.

In another aspect, the present invention also refers to a hierarchical composite structure obtainable by the above described process. This hierarchical composite structure of the invention comprises an open-cell graphene foam or graphene-like foam, wherein the graphene foam or graphene-like foam is coated with a conductive nanoporous spongy structure and wherein at least part of the hollow of the pores of the graphene foam or graphene-like foam is filled with the conductive nanoporous spongy structure.

In a particular embodiment, the graphene in the open-cell graphene foam or graphene-like foam obtained by the above described process may have between 1 and 20 layers of a single atomic graphene. Preferably, the graphene has between 1 and 15 layers, more preferably between 1 and 10 layers, even more preferably between 1 and 5 layers of a single atomic graphene. Even more preferably, the graphene in the open-cell graphene foam used in the invention is single-layer, bilayer or multilayer graphene having form 3 to 20 layers, more preferably from 3 to 5 layers of single atomic graphene.

In a particular embodiment, the graphene-like in the open-cell graphene-like foam of the hierarchical composite structure obtained by the above described process is ultra-thin graphite or reduced graphene oxide.

The pores of the open-cell graphene foam or graphene-like foam of the hierarchical composite structure obtained by the above described process, have a mean diameter ranging from 5 to 300 µm, preferably the mean diameter of the pores is at least 50 µm.

At least 10% v/v of the hollow of the pores of the open-cell graphene foam or graphene-like foam of the hierarchical composite structure obtained by the above described process, is filled with the conductive nanoporous spongy structure.

At least 10% v/v of the hollow of the pores is filled, preferably between 10 and 50% v/v, more preferably between 10 and 40% v/v, even more preferably between 10 and 20% v/v, even more preferably from 10% to 15% v/v, even more preferably 11% v/v of the hollow of the pores of the graphene foam or graphene-like foam is filled.

In a particular embodiment, the hollow of the pores of the open-cell graphene foam or graphene-like foam is filled from 10 to 90% v/v with the nanoporous spongy structure, preferably the hollow of the pores is filled from 15 to 90% v/v, more preferably from 40 to 90% v/v, even more preferably from 45 to 90% v/v. In a preferred embodiment the hollow of the pores is filled from preferably from 50 to 85% v/v, even more preferably from 60 to 80% v/v.

In the context of the present invention, the conductive nanoporous spongy of the hierarchical composite structure obtained by the above described process has nanopores with a diameter comprised between 5 and 500 nm, preferably of at least 50 nm, more preferably a diameter between 50 and 500 nm, more preferably between 100 and 500 nm, even more preferably between 200 and 500 nm, even more preferably between 300 and 500 nm.

In a particular embodiment, the conductive nanoporous spongy structure comprises a conductive polymer. Preferably, the conductive polymer is selected from polyaniline (PANI), polypyrrol, polycarbazol, polyindol, polyazepine, polythiophene, poly(3,4-ethylenedioxythiophen), polyphenylene sulfide, polyfluorene, polyphenylene, polypyrene, polyazulene, polynaphtalene, polyacetylene, polyphenylene vinylene and derivatives thereof. In a preferred embodiment the conductive polymer is polyaniline (PANI).

According to one embodiment of the present invention, the conductive nanoporous spongy structure comprises a framework of nanofibers of a conductive polymer. Figures 2b, c and d are SEM images showing a hierarchical composite structure of the invention comprising a framework of nanofibers non-conformally deposited on a graphene foam. In a particular embodiment the nanofibers have a diameter between 1 and 200 nm, preferably a diameter of at least 5 nm, more preferably a diameter comprised between 50 and 200 nm, even more preferably a diameter comprised between 100 and 200 nm, even more preferably between 100 and 150 nm. In a more preferred embodiment the nanofibers have a diameter of 100 nm.

In the context of the present invention, the nanofibers have a length comprised between 1 to 100 µm. Preferably, the length of the nanofibers is comprised between 1 and 75 µm, more preferably between 1 and 50 µm, even more preferably between 1 and 25 µm. In a more preferred embodiment the nanofibers have a length comprised between 1 and 10 µm.

According to the present invention, the nanofibers have a diameter comprised between 1 and 200 nm and a length comprised between 1 to 100 µm. In a particular embodiment, the nanofibers have a diameter comprised between 1 and 150 nm and a length comprised between 1 and 75 µm. In a more particular embodiment, the nanofibers have a diameter comprised between 1 and 100 nm and a length comprised between 1 and 75 µm. In a preferred embodiment, the nanofibers have a diameter comprised between 1 and 100 nm and a length comprised between 1 and 50 µm. In a more preferred embodiment, the nanofibers have a diameter comprised between 1 and 100 nm and a length comprised between 1 and 10 µm.

In a particular embodiment, the nanofibers of the conductive nanoporous spongy are aligned or entangled.

In a particular embodiment, the graphene foam or graphene-like foam is coated with a conductive nanoporous spongy structure comprising a framework of nanofibers of a conductive polymer having a planar density comprised between 20 nanofibers and 150 nanofibers per 3 µm². Preferably, a planar density comprised between 40 and 100 nanofibers per 3 µm², more preferably comprised between 60 and 100 nanofibers per 3 µm². In a preferred embodiment, the framework of nanofibers has a planar density of about 100, 65 or 40 nanofibers per 3 µm².

The nanofibers of the conductive nanoporous spongy are separated leaving nanopores in the nanofibers framework with a diameter comprised between 5 and 500 nm. Figures 2c and 2d show an example of an entangled nanofibers framework of a hierarchical composite structure of the invention, wherein nanopores are observed among the nanofibers. In a particular embodiment, the nanopores of the framework of nanofibers have a diameter of at least 50 nm, even more preferably between 50 and 500 nm, more preferably the nanopores have a diameter comprised between 100 and 500 nm, even more preferably between 200 and 500 nm, even more preferably between 300 and 500 nm.

In the context of the present invention, the nanofibers of the framework forming the conductive nanoporous spongy structure are made of a conductive polymer. Preferably, the conductive polymer in the nanofibers is selected from polyaniline (PANI), polypyrrole, polycarbazole, polyindole, polyazepine, polythiophene, poly(3,4-ethylenedioxythiophene), polyphenylene sulfide, polyfluorene, polyphenylene, polypyrene, polyazulene, polynaphtalene, polyacetylene, polyphenylene vinylene and derivatives thereof. Preferably the conductive polymer is polyaniline (PANI).

### Industrial applicability

The hierarchical composite structure of the present invention is useful in a wide variety of applications where materials with high surface area, electrical conductivity or low weight would be desirable. In one possible application, the hierarchical composite structure of the present invention may serve as a current collector in a battery, such as a lead-acid or a lithium-ion battery.

Further, the hierarchical composite structure of the present invention ensures a good specific and volumetric capacitance performance, since the large pore channels allow rapid electrolyte transport, while the small ones provide a higher surface area. Considering the energy density of a capacitor is generally determined by E=CV²/2, where C is the capacitance and V is the voltage, the hierarchical composite structures of the present invention with high specific and volumetric capacitance are of great interest for high-energy density device applications. Therefore, according to one aspect of the invention the hierarchical composite structure of the invention is used as a supercapacitor for improved energy storage.

In one aspect, the invention relates to an electrode comprising the hierarchical composite structure of the invention. In a particular embodiment the electrode comprising the hierarchical composite structure may be used in an electrochemical-energy-storage device.

In another particular embodiment, an electrode comprising the hierarchical composite structure may be used in an electrochemical-energy-storage device.

Further, the hierarchical composite structure of the invention may be used as a collector. Therefore, in a further aspect the invention relates to an electrode comprising an extended collector with the hierarchical composite structure of the invention. In a particular embodiment the collector comprising the hierarchical composite structure of the invention may be used as a collector in an electrochemical-energy-storage device.

In another aspect, the invention relates to an electrochemical-energy-storage device comprising at least one electrode with the hierarchical composite structure of the invention separated from a second electrode by a separator and immersed in an electrolyte. In a particular embodiment, the electrochemical-energy-storage device comprises two electrodes with the hierarchical composite structure of the invention, separated from each other by a separator and immersed in an electrolyte.

In a particular embodiment the electrochemical-energy-storage device is a supercapacitor comprising at least an electrode with the hierarchical composite structure of the invention. In another particular embodiment, the supercapacitor comprises two electrodes with the hierarchical composite structure of the invention, separated from each other by a separator and immersed in an electrolyte.

In one embodiment, the hierarchical composite structure of the present invention may be used as a sensor.

In one embodiment, the hierarchical composite structure of the invention may be used as a catalyst.

In one embodiment, the hierarchical composite structure of the invention may be used as a filter.

In one embodiment, the hierarchical composite structure of the invention may be used as an absorber.

### Examples

### 1. Production of the graphene foam

Graphene is deposited on open-cell nickel foam substrate by chemical vapor deposition (CVD). Once the open-cell nickel foam is introduced in the CVD reactor, the CVD system is pumped down to a pressure lower than 5 10⁻² mbar. Then, the system is heated up to 1000°C and the open-cell nickel foam is annealed for 5 minutes while H₂ is introduced into the CVD reactor to reach a pressure of 25 mbar to remove any existent trace of nickel oxide. Then, a mixture of methane and argon is introduced into the system for 5-20 min. The number of graphene layers deposited changes with the relation in the mixture Ar:H₂:CH₄, the deposition time and the cooling rate.

The open-cell nickel foam is removed by chemical etching with a mixture of HCl:H₂O (1:3 in volume).

In the case of an open-cell graphene foam with just a few graphene layers is desired, the deposition of a layer of PMMA:chlorobencene (PMMA 4.5% wt.) is required in order to preserve the integrity of the deposited graphene during the chemical etching. Once the open-cell nickel foam is removed, the deposited polymer is dissolved with hot acetone (55°C). Figure 3b shows an example of the final free-standing graphene foam structure obtained in this process.

### 2. Electrodeposition of PANI nanofibers on the graphene foam

The electrodeposition of the PANI nanofibers is carried out using a three-electrode system, wherein according to particular embodiments of the invention an open-cell graphene foam is the working electrode, while an Ag/AgCl electrode is the reference electrode and a platinum mesh is the counter electrode.

A mixture of HCl:CH₃OH:aniline (1:0.5:0.2 M) is used as electrolyte at 0.8 V at room temperature. The graphene foam is mounted on a non-conductive specimen holder by a drop of conductive silver paste that is subsequently isolated using an epoxy resin resistant to chemicals.

Previously to the electrodeposition process, the air trapped within the graphene foam is removed in vacuum conditions using a membrane pump (8 mbar). Once the air trapped is removed from the graphene foam, methanol may be optionally added to the solution.

Figures 4a-f show the corresponding SEM images of three samples prepared in the experimental condition described above wherein the potential has been applied in different experimental conditions. In particular, figures 4a and 4b show that when a continuous voltage (DC) is applied for 9 minutes along with stirring, a large density of PANI nanofibers with small diameter (mean diameter of about 100 nm) and smooth morphology is obtained. By contrast, the same potential and time without stirring leads to a lower density of nanofibers with slightly larger diameter (mean diameter of about 130 nm) and rougher morphology (figures 4c and 4d). Finally, when a pulsed potential with a duty cycle of 0.5 and t_{off} = 0.8 s is applied for 18 minutes (forcing a zero current during t_{off}) a more compact conductive nanoporous spongy structure is obtained, having the PANI nanofibers even larger diameters and rougher morphologies (figures 4e and f).

### 3. Electrochemical characterization of an electrode formed by the hierarchical composite structure of PANI-nanofiber sponge/graphene foam

All the electrochemical measurements are carried out in a three-electrode system with a 1M H₂SO₄ solution as the electrolyte. A hierarchical structure composite of PANI-nanofiber/graphene foam is directly tested as working electrode, while an Ag/AgCI electrode is used as the reference and a platinum mesh acts as the counter electrode. The electrochemical performance of the prepared electrode is characterized by cyclic voltammetry and galvanostatic charge-discharge tests. The specific capacitance is extracted from the discharge part of the galvanostatic process according to the following equation: Cₛₚ = It_{discharge}/(mΔV), wherein I is the constant current used in the measurement, t_{discharge} is the duration of the discharge process, ΔV is the voltage drop of the discharge process, and m is the mass of the active material of the electrode. The maximum specific capacitance value obtained in these conditions is 1474 F/g.

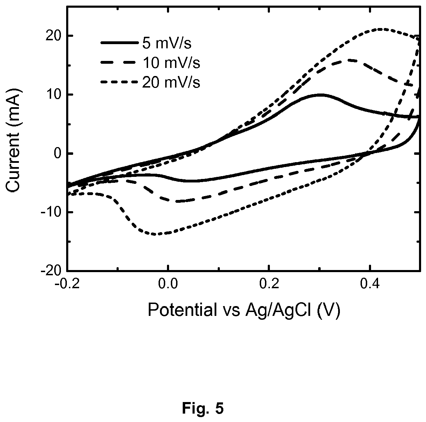

The cyclic voltammogram (CV) of the electrode of the invention is represented in figure 5. As it is shown, the current response increases with the increase in scan rate. Moreover the CV curves maintain their shape with the increase in scan rate implying that the exemplary electrode of the invention has good rate performance and low internal resistance to the ion diffusion.

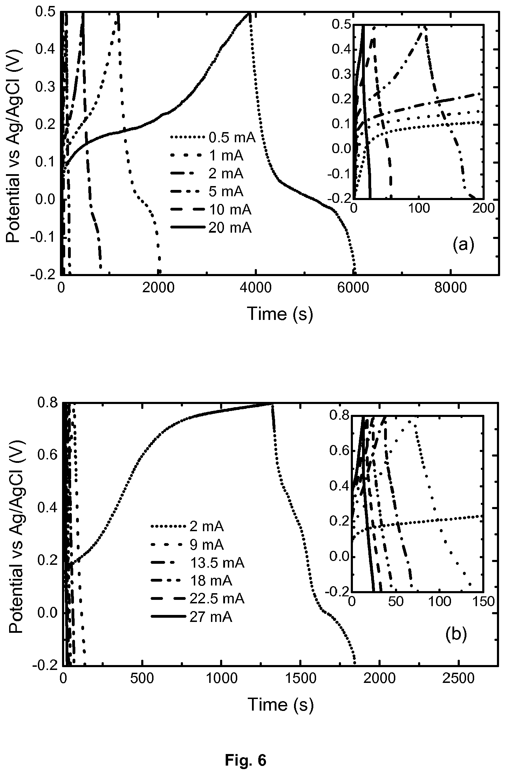

The galvanostatic charge-discharge curves of the electrode of the invention represented in figures 6a and 6b are measured at different currents and at two different voltage ranges.

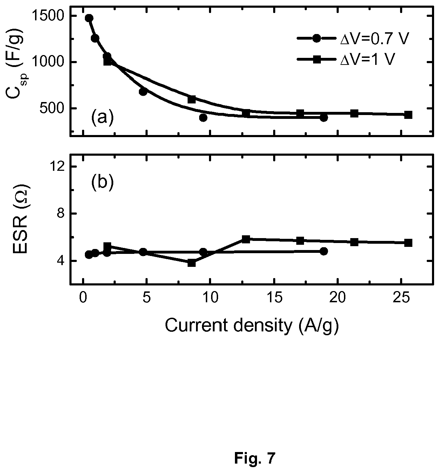

Further, figures 7a and b show, respectively, the variation of the specific capacitance and the equivalent series resistance (ESR) of the electrode of the invention with the current density. The values are extracted from the galvanostatic charge-discharge curves of figures 6a and 6b. The electrode provides a maximum specific capacitance of 1474 F/g at a current density of 0.47 A/g (∼ 1.4 mA/cm²). The specific capacitance decreases with increasing the current density, though is still above 1150 F/g for a current density of 1.4 A/g (∼ 4 mA/cm²) or above 800 F/g for a current density as high as 4 A/g (∼ 12 mA/cm²). The electrode exhibits a low ESR in the whole current density range.

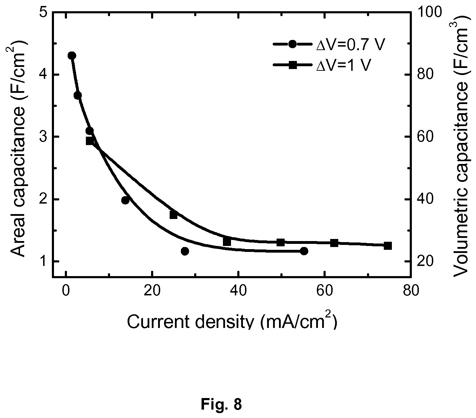

Figure 8 depicts the areal and volumetric capacitance of the electrode of the invention measured at two different voltages ranges: from -0.2 to 0.5 V (ΔV = 0.7 V) and from - 0.2 to 0.8 V (ΔV = 1 V).The figure shows that the areal capacitance of the electrode of the invention decrease from 4.3 to 1.3 F/cm² when the current density is increased from 1.4 to 74.6 mA/cm². Similar tendency is observed for the volumetric capacitance that decreases from 86 to 25 F/cm³ when the current density is increased from 1.4 to 74.6 mA/cm². The large surface area of the electrode favours a high areal and volumetric capacitances at moderate current densities, while at faster charging rates a surface confined redox process may limit the charge transfer kinetics and reduce the capacitance values. Since the values reported here correspond to a PANI nanofiber sponge filling the 11% v/v of the hollow of the pores, it is expected to obtain areal and volumetric capacitance values of 39 F/cm² and 780 F/cm³, respectively for a filling of 100% v/v.

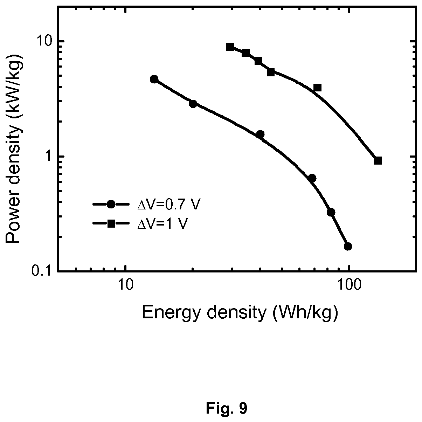

Figure 9 represents the Ragone plot of the electrode of the invention. The large specific capacitance of the electrode provides high energy and power density values. The energy density is given by the expression E = CₛₚV²/2, whereas the power density is determined by the expression P = E/t_{discharge}. Values as high as 134 Wh/kg and 9 kW/kg, respectively, are obtained when the electrode is charged and discharged in the potential range from -0.2 to 0.8V (ΔV = 1V). Moreover, the low ESR values imply a high maximum power density, calculated as Pₘₐₓ= V²/(4 ESR m), which reaches a value of 43 kW/kg.

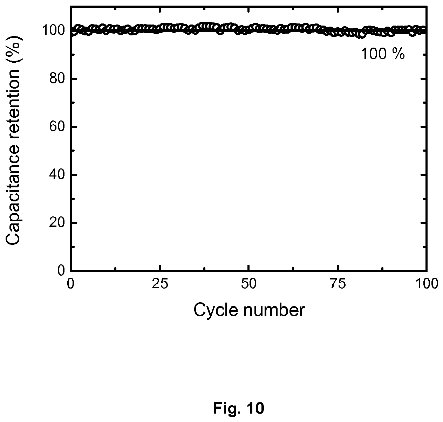

Figure 10 presents the capacitance retention of the electrode of the invention with the number of charge and discharge cycles. The figure shows that the electrode retains 100% of the initial capacitance value after 100 cycles, indicating a good cycling stability.

## Claims

1. A hierarchical composite structure comprising an open-cell graphene foam or graphene-like foam, wherein the graphene-like material in the graphene-like foam is ultra-thin graphite or reduced graphene oxide, wherein the graphene foam or graphene-like foam has pores of a mean diameter ranging from 5 to 300 µm and is coated with a conductive nanoporous spongy structure comprising a framework of entangled nanofibers of a conductive polymer, and wherein at least 10% v/v of the hollow of the pores of the graphene foam or graphene-like foam is filled with the framework of entangled nanofibers of a conductive polymer.

2. The hierarchical composite structure according to claim 1, wherein from 10% to 90% v/v of the hollow of the pores of the graphene foam or graphene-like foam is filled with the framework of entangled nanofibers of a conductive polymer.

3. The hierarchical composite structure according to claims 1-2, wherein the graphene in the open-cell graphene foam is single-layer, bilayer or multi-layer having from 3 to 20 layers of a single atomic graphene.

4. The hierarchical composite structure according to any preceding claims, wherein the pores formed by the framework of entangled nanofibers of a conductive polymer have a mean diameter ranging from 50 to 500 nm.

5. The hierarchical composite structure according to any preceding claims, wherein the nanofibers in the framework of entangled nanofibers of the conductive polymer have a diameter of between 5 and 200 nm.

6. The hierarchical composite structure according to claim 5, wherein the conductive polymer is selected from the group consisting of polyaniline, polypyrrole, polycarbazole, polyindole, polyazepine, polythiophene, poly(3,4-ethylenedioxythiophene), polyphenylene sulfide, polyfluorene, polyphenylene, polypyrene, polyazulene, polynaphtalene, polyacetylene, polyphenylene vinylene and derivatives thereof.

7. The hierarchical composite structure according to claim 6, wherein the conductive polymer is polyaniline.

8. A process for preparing the hierarchical composite structure as defined in claims 1-7, said process comprising:
a) providing a graphene foam or graphene-like foam having an open-cell structure;
b) immersing the graphene foam or graphene-like foam in a electrolyte solution, wherein the electrolyte solution comprises a conductive material or a precursor thereof and optionally an anti-agglomerating agent;
c) removing the air trapped in the graphene foam or graphene-like foam immersed in the electrolyte solution, and adding an anti-agglomerating agent if it is not added in step b);
d) electrodepositing the conductive material, or the conductive material formed from the precursor thereof, on the graphene foam or graphene-like foam in the electrolyte solution, so as a framework of entangled nanofibers of the conductive material is formed coating the graphene foam or graphene-like foam and partially filling the hollow of the pores of the graphene foam or graphene-like foam.

9. The process according to claim 8, wherein the precursor of the conductive material is aniline.

10. The process according to anyone of claims 8 to 9, wherein the anti-agglomerating agent is an alcohol.

11. The process according to anyone of claims 8 to 10, wherein the electrodeposition is carried out applying a continuous potential between 0.65 and 0.85 V.

12. An electrode comprising the hierarchical composite structure according to claims 1-7.

13. An electrochemical-energy-storage device comprising at least one electrode as defined in claim 12, separated from a second electrode by a separator and immersed in an electrolyte.

14. The electrochemical-energy-storage device according to claim 13, which is a supercapacitor.

## Patentansprüche

1. Hierarchische Verbundstruktur, die einen offenzelligen Graphenschaum oder graphenähnlichen Schaum umfasst, wobei das graphenähnliche Material in dem graphenähnlichen Schaum ultradünner Graphit oder reduziertes Graphenoxid ist, wobei der Graphenschaum oder graphenähnliche Schaum Poren mit einem mittleren Durchmesser zwischen 5 und 300 µm aufweist und mit einer leitfähigen nanoporösen Schwammstruktur beschichtet ist, die ein Gerüst aus verknäulten Nanofasern aus einem leitfähigen Polymer umfasst, und wobei zumindest 10 Vol.-% des Hohlraums der Poren des Graphenschaums oder graphenähnlichen Schaums mit dem Gerüst aus verknäulten Nanofasern aus einem leitfähigen Polymer gefüllt ist.

2. Hierarchische Verbundstruktur nach Anspruch 1, wobei zwischen 10 Vol.-% und 90 Vol.-% des Hohlraums der Poren des Graphenschaums oder graphenähnlichen Schaums mit dem Gerüst aus verknäulten Nanofasern aus einem leitfähigen Polymer gefüllt ist.

3. Hierarchische Verbundstruktur nach Anspruch 1 bis 2, wobei das Graphen in dem offenzelligen Graphenschaum einschichtig, zweischichtig oder mehrschichtig mit 3 bis 20 Schichten aus einatomigem Graphen ist.

4. Hierarchische Verbundstruktur nach einem der vorhergehenden Ansprüche, wobei die Poren, die von dem Gerüst aus verknäulten Nanofasern aus einem leitfähigen Polymer gebildet sind, einen mittleren Durchmesser zwischen 50 und 500 nm aufweisen.

5. Hierarchische Verbundstruktur nach einem der vorhergehenden Ansprüche, wobei die Nanofasern in dem Gerüst aus verknäulten Nanofasern aus dem leitfähigen Polymer einen Durchmesser zwischen 5 und 200 nm aufweisen.

6. Hierarchische Verbundstruktur nach Anspruch 5, wobei das leitfähige Polymer aus der Gruppe bestehend aus Polyanilin, Polypyrrol, Polycarbazol, Polyindol, Polyazepin, Polythiophen, Poly(3,4-ethylendioxythiophen), Polyphenylensulfid, Polyfluoren, Polyphenylen, Polypyren, Polyazulen, Polynaphthalen, Polyacetylen, Polyphenylenvinylen und Abkömmlingen davon ausgewählt ist.

7. Hierarchische Verbundstruktur nach Anspruch 6, wobei das leitfähige Polymer Polyanilin ist.

8. Verfahren zur Herstellung der hierarchischen Verbundstruktur wie in Anspruch 1 bis 7 definiert, wobei das Verfahren umfasst:
a) Bereitstellen eines Graphenschaums oder graphenähnlichen Schaums mit einer offenzelligen Struktur;
b) Eintauchen des Graphenschaums oder graphenähnlichen Schaums in eine Elektrolytlösung, wobei die Elektrolytlösung ein leitfähiges Material oder einen Vorläufer davon und gegebenenfalls ein Agglomerationsverhinderungsmittel umfasst;
c) Entfernen der Luft, die in dem in die Elektrolytlösung eingetauchten Graphenschaum oder graphenähnlichen Schaum eingeschlossen ist, und Zugeben eines Agglomerationsverhinderungsmittels, wenn es nicht in Schritt b) zugegeben wird;
d) elektrolytisches Abscheiden des leitfähigen Materials oder des leitfähigen Materials, das aus dem Vorläufer davon gebildet ist, auf dem Graphenschaum oder graphenähnlichen Schaum in der Elektrolytlösung, damit ein Gerüst aus verknäulten Nanofasern aus dem leitfähigen Material entsteht, das den Graphenschaum oder graphenähnlichen Schaum beschichtet und den Hohlraum der Poren des Graphenschaums oder graphenähnlichen Schaum teilweise füllt.

9. Verfahren nach Anspruch 8, wobei der Vorläufer des leitfähigen Materials Anilin ist.

10. Verfahren nach Anspruch 8 oder 9, wobei das Agglomerationsverhinderungsmittel ein Alkohol ist.

11. Verfahren nach einem der Ansprüche 8 bis 10, wobei das elektrolytische Abscheiden unter Anlegung eines kontinuierlichen Potenzials zwischen 0,65 und 0,85 V durchgeführt wird.

12. Elektrode, die die hierarchische Verbundstruktur nach Anspruch 1 bis 7 umfasst.

13. Elektrochemische Energiespeichervorrichtung, die mindestens eine wie in Anspruch 12 definierte Elektrode umfasst, die von einer zweiten Elektrode durch einen Separator getrennt ist und in einem Elektrolyten eingetaucht ist.

14. Elektrochemische Energiespeichervorrichtung nach Anspruch 13, die ein Superkondensator ist.

## Revendications

1. Une structure composite hiérarchique comprenant une mousse de graphène à cellules ouvertes ou une mousse en un matériau de type graphène, dans laquelle le matériau de type graphène dans la mousse en un matériau de type graphène est du graphite ultra-mince ou de l'oxyde de graphène réduit, dans laquelle la mousse de graphène ou la mousse en un matériau de type graphène a des pores d'un diamètre moyen allant de 5 à 300 µm et est revêtue d'une structure spongieuse nanoporeuse conductrice comprenant une ossature de nanofibres enchevêtrées d'un polymère conducteur, et dans laquelle au moins 10% v/v de l'espace occupé par les pores de la mousse de graphène ou de la mousse en un matériau de type graphène est rempli par l'ossature de nanofibres enchevêtrées d'un polymère conducteur.

2. La structure composite hiérarchique selon la revendication 1, dans laquelle de 10% à 90% v/v de l'espace occupé par les pores de la mousse de graphène ou de la mousse en un matériau de type graphène est rempli par l'ossature de nanofibres enchevêtrées d'un polymère conducteur.

3. La structure composite hiérarchique selon les revendications 1-2, dans laquelle le graphène dans la mousse de graphène à cellules ouvertes est monocouche, bicouche ou multicouche ayant de 3 à 20 couches d'un graphène atomique unique.

4. La structure composite hiérarchique selon l'une quelconque des revendications précédentes, dans laquelle les pores formés par l'ossature de nanofibres enchevêtrées d'un polymère conducteur ont un diamètre moyen allant de 50 à 500 nm.

5. La structure composite hiérarchique selon l'une quelconque des revendications précédentes, dans laquelle les nanofibres dans l'ossature de nanofibres enchevêtrées du polymère conducteur ont un diamètre compris entre 5 et 200 nm.

6. La structure composite hiérarchique selon la revendication 5, dans laquelle le polymère conducteur est choisi dans le groupe constitué par la polyaniline, le polypyrrole, le polycarbazole, le polyindole, la polyazépine, le polythiophène, le poly(3,4-éthylènedioxythiophène), le polyphénylène sulfide, le polyfluorène, le polyphénylène, le polypyrène, le polyazulène, le polynaphtalène, le polyacetylène, le polyphénylène vinylène et les dérivés de ceux-ci.

7. La structure composite hiérarchique selon la revendication 6, dans laquelle le polymère conducteur est la polyaniline.

8. Un procédé de préparation de la structure composite hiérarchique telle que définie dans les revendications 1-7, ledit procédé comprenant :
a) le fait de fournir une mousse de graphène ou une mousse en un matériau de type graphène ayant une structure à cellules ouvertes ;
b) le fait d'immerger la mousse de graphène ou la mousse en un matériau de type graphène dans une solution électrolytique, dans laquelle la solution électrolytique comprenne un matériau conducteur ou un précurseur de celui-ci et éventuellement un agent anti-agglomérant ;
c) le fait d'éliminer l'air emprisonné dans la mousse de graphène ou la mousse semblable au graphène immergée dans la solution électrolytique, et ajouter un agent anti-agglomérant s'il n'est pas ajouté à l'étape b) ;
d) le fait de procéder à une électrodéposition du matériau conducteur, ou du matériau conducteur formé à partir du précurseur de celui-ci, sur la mousse de graphène ou la mousse en un matériau de type graphène dans la solution électrolytique, de manière à ce qu'une ossature de nanofibres enchevêtrées du matériau conducteur soit formée, revêtant la mousse de graphène ou la mousse en un matériau de type graphène et remplissant partiellement l'espace formé par les pores de la mousse de graphène ou de la mousse en un matériau de type graphène.

9. Le procédé selon la revendication 8, dans lequel le précurseur du matériau conducteur est l'aniline.

10. Le procédé selon l'une quelconque des revendications 8 à 9, **caractérisé en ce que** l'agent anti-agglomérant est un alcool.

11. Le procédé selon l'une quelconque des revendications 8 à 10, dans lequel l'électrodéposition est effectuée en appliquant un potentiel continu compris entre 0,65 et 0,85 V.

12. Une électrode comprenant la structure composite hiérarchique selon les revendications 1-7.

13. Un dispositif de stockage d'énergie électrochimique comprenant au moins une électrode telle que définie dans la revendication 12, séparée d'une deuxième électrode par un séparateur et plongée dans un électrolyte.

14. Le dispositif de stockage d'énergie électrochimique selon la revendication 13, qui est un supercondensateur.
